# EUROPEAN PATENT APPLICATION

(11) **EP 4 324 796 A1**
(43) Date of publication of application: **21.02.2024**
(21) Application number: 23191354.2
(22) Date of filing: 14.08.2023
(51) Int. Cl.: C02F 1/465, B03D 1/14, C02F 1/24, C02F 1/467, C02F 1/40, C02F 1/461, B03D 1/02

(54) **A FLOTATION COLUMN AND A SYSTEM FOR TREATMENT OF WASTEWATER CONTAINING SAID FLOTATION COLUMN**

(30) Priority: 15.08.2022 SK 500572022 U
(71) Applicant: Ustav Geotechniky Slovenskej Akademie Vied Verejna Vyskumna Institucia, 040 01 Kosice (SK)
(72) Inventor: Kupka, Daniel, 040 13 Kosice (SK); Vaclavikova, Miroslava, 040 01 Kosice (SK); Bodnar, Gergo, 079 01 Velke Kapusany (SK)
(74) Representative: Majlingová, Zuzana

(57) **Abstract**

The invention describes a flotation column for wastewater treatment, which contains two axially arranged tubes, where the outer tube (1) is terminated at the lower end by a bottom (2) and a discharge opening (3) equipped with a control valve, and where the outer tube (1) is in upper part equipped with a device (4) for removing foam, and where the outer tube (1) consists of a narrower upper part (5) and a wider lower part (6), between which a conical part (7) is placed, the upper circumference of which corresponds to the circumference of the narrower of the upper part (5) and the lower circumference corresponds to the circumference of the wider lower part (6), and where the inner tube (9) is shorter than the outer tube (1) and its upper end extends into the narrower upper part (5) of the outer tube (1), and where its lower end is adapted to the inlet of purified water and passes through the bottom (2) of the outer tube (1), and where the ratio of the diameters of the inner tube (9) and the narrower upper part (5) of the outer tube (1) is within 1:1.5 to 3, and where the ratio of the diameters of the narrower upper part (5) and the wider lower part (6) of the outer tube (1) is in the range of 1:1.5 to 3, and where the ratio of the length of the wider lower part (6), including of the conical part (7), to the total length of the outer tube (1) is 1:1 to 1:3. The invention also deals with a wastewater treatment system containing a column according to the invention and an electrochemical reactor (10).

## Description

### Technical field

The invention relates to wastewater treatment device, mainly flotation columns. The invention also relates to a wastewater treatment system.

### Background art

Industrial and municipal wastewater cannot be discharged back into the environment or returned to the technological cycle without proper treatment.

The choice of wastewater treatment method depends primarily on the size of the pollutants. Contaminants with a size of 10⁻⁴ - 10⁻⁶ m create heterogeneous systems with water and can be separated using filtration, sedimentation, centrifugation, or flotation. Colloidal particles with dimensions of 10⁻⁶ - 10⁻⁹ m, e.g. polymers and metal hydroxides are separated using micro- and nanofiltration, or by the method of coagulation and flocculation. Particles <10⁻⁹ m in size (below 1 nm), dissolved organic substances and inorganic ions form homogeneous systems, or real solutions. The most common water treatment methods to remove dissolved contaminants are: biological treatment, advanced oxidation processes (AOP), adsorption and ion exchange methods, electrodialysis and reverse osmosis.

Foam fractionation/flotation are the terms given to the separation processes by which inorganic and organic ions, molecules, colloidal particles, and suspended solids are floated from aqueous solutions with a rising stream of bubbles. (M. Hiraide, in Encyclopedia of Analytical Science (Second Edition), 2005).

Flotation columns are used for wastewater treatment by foam fractionation/flotation. Currently used flotation columns generally contain a single tube. When the feed water stream is located above the foam/water interface in the column, this is referred to as stripping mode of operation. Conversely, when the feeding point is below the foam/water interface, it is referred to as enriching mode. Separation of pollutants takes place due to the effect of bubbles generated by the source of bubbles in the lower part of the column. Based on the large gas-liquid mass difference, the bubbles rise up, the water drains downwards by gravity, and takes part of the bubbles with it. The bubbles rise in the water column in the opposite direction, overcoming the resistance of the countercurrent of the water and floating the pollutants upwards in the form of foam.

The disadvantage of this construction is that in order to ensure a sufficiently long contact of the bubbles with the water and thus effective separation of pollutants, the length of the column must be relatively long.

The primary method of cleaning wastewater from soluble contaminants and particles below 1 nm is biological treatment. However, some substances are biologically difficult to degrade, the so-called persistent organic pollutants such as toxic substances, pesticides, synthetic dyes, pharmaceuticals and personal hygiene products.

Several new procedures have been developed for the elimination of persistent organic pollutants from wastewater. They also include processes that are collectively known as "advanced oxidation processes". These procedures remove particles <10⁻⁹ m in size (below 1 nm).

One of the above mentioned processes is electrochemical advanced oxidation processes (EAOPs). EAOPs represent a destructive process in which organic substances undergo decomposition/mineralization in a given matrix into inorganic products. This process takes place in an electrochemical reactor.

An electrochemical reactor is a device in which electrochemical reactions take place. An electrochemical reactor (electrochemical cell) consists of at least two electrodes immersed in an electrolyte. Electrodes are made of conductive material (metal, carbon), and in rare cases also of semiconductors. Charge carriers in the electrodes are electrons, in the electrolyte they are ions. An electrochemical cell can function as an energy source (galvanic cell, battery) or as an electrolytic cell (electrolyser). In electrolyser, both ends of the electrochemical cell are connected to an external source that supplies the energy needed to drive the reaction in the electrochemical system. Electrochemical processes take place at the electrodes during the passage of direct current through the electrolyte solution. The direction of the electric current is determined by an external power source.

A combination of electrocoagulation and electroflotation processes in a single system is also used in the treatment of industrial wastewater. In the process of electrocoagulation, coagulation agents are electrochemically generated using active, so-called "sacrificial" anodes made of aluminum or iron, or other metals (Cu, Zn, Ni), which are dissolved and consumed during the electrolytic process due to oxidation. Al³⁺ and Fe³⁺ ions are quickly transformed into hydroxide and polyhydroxide complexes, which adhere physically or chemically to contaminants present in wastewater and form flakes (flocculation), which are subsequently separated from the liquid phase in the electroflotation process. An accompanying problem of such a procedure is the formation of waste sludge containing metals originating from the anode material and coprecipitating contaminants from the wastewater. It is necessary to further process or deposit the sludge, which represents additional economic costs and an ecological burden.

The aim of this invention is a flotation column with improved separation properties. The object of the invention is also a system for wastewater treatment containing a flotation column according to the invention and an electrochemical reactor.

### Summary of invention

The first aspect of this invention is a flotation column for wastewater treatment, which contains two axially arranged tubes, where:
- the outer tube is terminated at the lower end with a bottom and an outlet opening for the outflow of treated water equipped with a control valve, and where the outer tube is equipped with a foam collector in the upper part, and where the outer tube consists of a narrower upper part and a wider lower part, between which it is placed a conical part, the upper diameter of which corresponds to the diameter of the narrower upper part and the lower diameter corresponds to the diameter of the wider lower part, and where
- the inner tube is shorter than the outer tube and its upper end extends into the narrower upper part of the outer tube, and where its lower end is adapted to the inlet of treated water and passes through the bottom of the outer tube,

and where the ratio of the diameters of the inner tube and the narrower upper part of the outer tube is in the range of 1:1.5 to 3,
and where the ratio of the diameters of the narrower upper part and the wider lower part of the outer tube is in the range of 1:1.5 to 3,
and wherein the ratio of the length of the wider lower part, including the conical part, to the total length of the outer tube is 1:1 to 1:3.

According to a preferred embodiment, the ratio of the diameters of the inner tube and the narrower upper part of the outer tube is in the range of 1:1.8 to 2.1; preferably 1:2. The ratio of the diameters of the narrower upper part and the wider lower part of the outer tube is in the range of 1:1.8 to 2.1; preferably 1:2. The ratio of the length of the wider lower part, including the conical part, to the total length of the outer tube is 1:1 to 1:2.

According to a preferred embodiment, the narrower upper part of the outer tube, the wider lower part of the outer tube and the conical part are connected by detachable connections, preferably by quick connections of the Tri Clamp type.

According to a preferred embodiment, both the outer tube and the inner tube are made of a transparent material, preferably of glass, acrylic or polycarbonate.

The foam removal device is preferably a vacuum pump or a foam collector.

The second aspect of this invention is a system of wastewater treatment, which contains at least one electrochemical reactor, where the output of the electrochemical reactor is connected to the input of at least one flotation column according to this invention. Where the electrochemical reactor contains at least two dimensionally stable (non-consumable) electrodes - anode and cathode. The electrodes can be titanium electrodes covered with a mixture of metal oxides and/or electrodes covered with a boron-doped diamond catalytic layer. Preferably, the anode contains a boron-doped diamond catalytic layer. Most preferably, both the anode and the cathode contain a boron-doped diamond catalytic layer.

According to a preferred embodiment, the electrochemical cell is undivided, i.e. the anode and cathode parts are not separated by an ion-permeable membrane.

Different types of electrochemical reactors can be used in the system according to the invention. For example, a reactor with laminar flow of water between flat rectangular plate electrodes, separated by spacers and insulating pads so that there is a gap between adjacent electrodes that allows the flow of wastewater in a direction perpendicular to the flow of electric current, is suitable for the treatment of highly polluted waters with a high value of the COD indicator (chemical oxygen demand) > 1000 mg/L). Next, a reactor with a turbulent flow of processed water between the electrodes, in which the water flows through small holes in the circular electrodes that allow the turbulent flow of the wastewater in a direction parallel to the direction of the electric current flow. Such a reactor is suitable for waters with a low COD value < 300 mg/L. Laminar or turbulent flow of waste water is necessary to improve the contact of the processed water with the surface of the electrodes. The subsequent function of the flotation column remains the same for both types of upstream electrochemical reactor.

The smaller the gap between the electrodes, the lower the potential of the electrochemical reactor, because the resistance of the electrolyte depends almost linearly on the distance between the electrodes. A smaller gap between the electrodes therefore reduces the energy consumption of the system.

The proposed system according to the invention uses a combination of electrochemical decomposition (destruction method) and foam fractionation (separation method). In the decomposition of organic pollutants, electrochemical advanced oxidation processes are used, which take place in an electrochemical reactor at the electrode/solution interface, or in close proximity to the electrode surfaces. In the separation of pollutants, the process of electroflotation and foam fractionation in a flotation column is used.

The advantage of this combination is that the system according to the invention, does not need an external source of bubbles (for use in a flotation column). In this case, the source of the bubbles is the electrochemical reactor itself. During the electrolysis of water in the electrochemical reactor, fine hydrogen and oxygen bubbles are generated, which proceed to the flotation column, where they participate in the separation of pollutants.

According to a preferred embodiment, both the anode and the cathode of the electrochemical reactor are covered with a boron-doped diamond catalytic layer, to enable polarity switching on the terminals of the electrochemical reactor (polarity reversal).

Scale deposition on electrodes surface is a problem that occurs during treatment of aqueous solutions containing low solubility salt ions Ca²⁺, Mg²⁺, Fe³⁺, Mn²⁺ and hydrogen carbonates HCO3⁻. In a preferred embodiment, in the system according to the present invention, automatic cleaning of the surface of the electrodes takes place by means of regular switching of the polarity on the terminals of the electrochemical reactor. By changing the cathode to the anode, which creates an acidic environment, the carbonate precipitates will be dissolved and released and the surface will be cleaned. The time between two polarity reversals should be in the range of 10 to 60 minutes. Advantageously, the electrochemical reactor can be connected to a programmable power supply with adjustable voltage and current and to relays for switching the polarity, which will enable automatic self-cleaning of the electrochemical reactor by periodically reversing the polarity of the electrodes.

According to a preferred embodiment, the system also includes a self-priming centrifugal pump connected to the input of the electrochemical reactor.

According to a preferred embodiment, the system according to the invention contains one electrochemical reactor and one flotation column according to the first aspect of the present invention.

The stream of water flowing upwards from the electrochemical reactor is driven into the inner tube of the double-walled countercurrent flotation column. In the inner tube, water and bubbles flow upwards in one direction. Separation of pollutants takes place due to the effect of uniform, finely dispersed gas bubbles, which are created in the electrochemical reactor. This mixture then enters the outer tube (larger in diameter than the inner tube), where the flow slows down and water and foam separate. The water flows down by gravity, in the space between the inner and outer tube, and takes some of the bubbles with it. The bubbles rise in the opposite direction, overcoming the resistance of the countercurrent of the water and floating the pollutants upwards in the form of foam. The foam can be removed "actively" using a vacuum pump, or passively by flowing the foam over the overflow edge into the collector. In the conical part, the speed of the liquid flow is further slowed down, which ensures complete separation of the liquid from the gas bubbles. The purified water flows from the bottom of the column through the side outlet. The height of the water level in the flotation column and the foam product separation process are set using the control gate valve. This process ensures a sufficiently long contact of the bubbles with water and thus effective separation of pollutants (e.g. perfluoroalkyl and polyfluoroalkyl compounds) even with a shorter column length.

Water enters the flotation column in the lower part. According to a preferred embodiment, the inner tube of the flotation column is connected to the outlet opening of the electrochemical reactor by means of a quick coupling or its equivalent. The height level (hydrostatic pressure of the water column) in the flotation column is set by the gate valve on the discharge hole, which affects the process of separating the foam product. The device is designed as a modular system with the possibility of easy assembly, disassembly and transport of individual parts (connection using the Tri Clamp system quick-connects).

The optimum operating conditions could vary depending on the type of contaminants and the water matrix. Parameters, such as water flow rate, applied current density and vertical adjustment of the flotation columns can be changed, to control the foam production zone as needed.

In the system according to this invention, hydrophobic and surface-active substances, synthetic dyes, perfluoroalkyl- and polyfluoroalkylated compounds, proteins and others are more effectively separated. Effective separation can also be achieved by setting a suitable flotation mode (bubble formation, water flow, water column height).

The system according to the invention uses only electrical energy to drive the pump and power the electrochemical reactor and does not require the addition of chemical reagents (coagulants, flocculants, surfactants).

The system can also be powered by solar cells and other renewable energy sources.

The proposed technology combines the advantages of electrochemical advanced oxidation processes with electroflotation into one integrated system for cleaning different types of wastewater. The technology can be considered green because it does not require the addition of any chemicals.

### Brief description of drawings

Fig. 1 shows a flotation column according to the present invention.
Fig. 2 shows a system of wastewater treatment.

### Examples

### Example 1

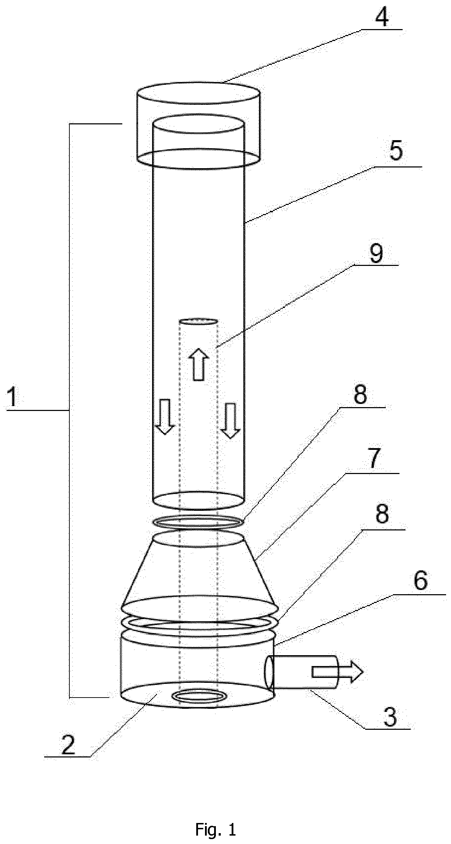

The flotation column shown in Figure 1 contains two axially arranged tubes. The outer tube 1 has a total length of 1000 mm and is terminated at the lower end by a bottom 2 and a drain hole 3 with a gate valve. The outer tube 1 is equipped in the upper part with a device 4 for removing foam in the form of a foam collector. The outer tube 1 consists of three parts: a narrower upper part 5 with a diameter of 150 mm and a length of 500 mm, a wider lower part 6 with a diameter of 250 mm and a length of 250 mm, between which a 250 mm high conical part 7 is placed. These three parts are connected by quick couplings, e.g. of Tri Clamp type 8. The inner tube 9 has a diameter of 50 mm and a length of 750 mm, and its upper end extends into the narrower upper part 5 of the outer tube 1. The lower end of the inner tube 9 forms an inlet opening for the inlet of treated water.

### Example 2

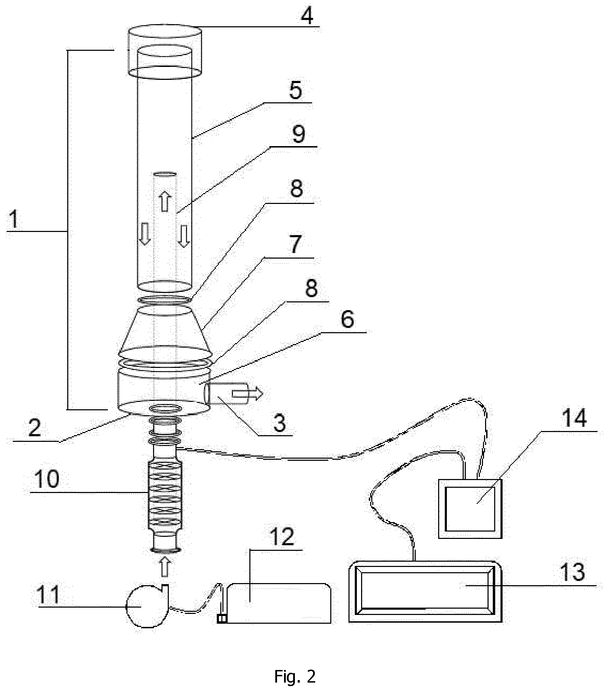

The system shown in Figure 2 includes the flotation column described in example 1. An electrochemical reactor 10 is connected to the inlet of the flotation column. A self-priming centrifugal pump 11 with flow control (0-1 liter s⁻¹) using a power source 12 with adjustable voltage and current (0 - 12 VDC/ 10 A; or 0 - 24 VDC/ 5 A) is connected to the reactor inlet. The electrochemical reactor 10 contains a power source 13. Between the power source 13 of the reactor and the electrochemical reactor 10, a device 14 for switching polarity is placed.

Pump parts coming into contact with treated water must be made of stainless steel or other inert material. The self-priming centrifugal pump 11 delivers water to the inlet opening of the electrochemical reactor 10.

The electrochemical reactor 10 contains electrodes with a BDD catalytic layer (both anodes and cathodes are advantageously equipped with a BDD catalytic layer) so that it is possible to repeatedly switch the polarity (anode --+ cathode and vice versa).

### Example 3

Polluted water is supplied to the device by a self-priming centrifugal pump 11. The direction of water flow is from bottom to top. The water enters the electrochemical reactor 10, where organic pollutants are decomposed. The stream of water emerging from the electrochemical reactor 10 flows upwards into the flotation column, where pollutants are separated by the effect of gas bubbles that are formed in the electrochemical reactor 10.

The wastewater is pumped through the electrochemical reactor 10 and subsequently through the flotation column in a one-time or recirculation mode. The water flow rate can be regulated using a DC centrifugal self-priming pump 11.

### List of reference marks:

1 outer tube
2 bottom
3 outlet hole
4 device for removing foam
5 narrower upper part
6 wider lower part
7 conical part
8 detachable joint
9 inner tube
10 electrochemical reactor
11 self-priming centrifugal pump
12 pump power source
13 reactor power source
14 polarity switching device

## Claims

1. A flotation column for wastewater treatment, **characterized in that**, it contains two axially arranged tubes, wherein:
- an outer tube (1) is terminated at a lower end with a bottom (2) and a discharge hole (3) equipped with a control valve, and where the outer tube (1) is equipped in an upper part with a device (4) for removing foam, and wherein the outer tube (1) consists of a narrower upper part (5) and a wider lower part (6), between which a conical part (7) is placed, an upper diameter of which corresponds to a diameter of the narrower upper part (5) and a lower diameter corresponds to a diameter of the wider lower part (6), and wherein
- an inner tube (9) is shorter than the outer tube (1) and its upper end extends into the narrower upper part (5) of the outer tube (1), and wherein its lower end is adapted to the inlet of treated water and passes through the bottom (2) of the outer tube (1),
and wherein the ratio of the diameters of the inner tube (9) and the narrower upper part (5) of the outer tube (1) is in the range of 1:1.5 to 3,
and wherein the ratio of the diameters of the narrower upper part (5) and the wider lower part (6) of the outer tube (1) is in the range of 1:1.5 to 3,
and wherein the ratio of the length of the wider lower part (6), including the conical part (7), to the total length of the outer tube (1) is 1:1 to 1:3.

2. The flotation column according to claim 1, **characterized in that** the ratio of the diameters of the inner tube (9) and the narrower upper part (5) of the outer tube (1) is in the range of 1:1.8 to 2.1, preferably 1:2, and wherein the ratio of the diameters of the narrower upper part (5) and the wider lower part (6) of the outer tube (1) is in the range of 1:1.8 to 2.1, preferably 1:2, and wherein the ratio of the length of the wider lower part (6), including the conical part (7), to the total length of the outer tube (1) is 1:1 to 1:2.

3. The flotation column according to claim 1, **characterized in that** the narrower upper part (5), the wider lower part (6) and the conical part (7) are connected by a detachable connection (8), preferably by quick connections of the Tri Clamp type.

4. The flotation column according to claim 1, **characterized in that** both the outer tube (1) and the inner tube (9) are made of a transparent material, preferably of glass, acrylic or polycarbonate.

5. The flotation column according to claim 1, **characterized in that** the device (4) for removing foam is a vacuum pump or a foam collector.

6. A system of wastewater treatment **characterized in that** it contains at least one electrochemical reactor (10) containing at least two dimensionally stable electrodes, an anode and a cathode, and wherein the output of the electrochemical reactor (10) is connected to the input of at least one flotation column according to any one of claims 1 to 5.

7. The system according to claim 6, **characterized in that** the dimensionally stable electrodes are selected from the group comprising titanium electrodes covered with a mixed metal oxides and electrodes equipped with a boron-doped diamond catalytic layer, preferably the anode is equipped with a boron-doped diamond catalytic layer, the most preferably both the anode and the cathode equipped with a boron-doped diamond catalytic layer.

8. The system according to claim 6 or 7, **characterized in that** the electrochemical reactor (10) is a reactor with laminar or turbulent water flow.

9. The system according to any one of claims 7 to 8, **characterized in that** the electrochemical reactor (10) further comprises a direct current power source (13) with adjustable voltage and current and a device (14) for switching polarity.

10. The system according to any one of claims 6 to 9, **characterized in that** it further comprises a self-priming centrifugal pump (11) connected to the input of the electrochemical reactor (10).

11. The system according to claim 6, **characterized in that** it contains one electrochemical reactor (10) and one flotation column according to any one of claims 1 to 5.
